# EUROPÄISCHE PATENTSCHRIFT

(11) **EP 2 895 804 B1**
(45) Veröffentlichungstag und Bekanntmachung des Hinweises auf die Patenterteilung: **21.10.2020**
(21) Anmeldenummer: 13759768.8
(22) Anmeldetag: 11.09.2013
(51) Int. Cl.: F25B 43/04

(54) **SAMMELBEHÄLTER UND VERFAHREN ZUR RÜCKGEWINNUNG VON ARBEITSMITTEL IN SORPTIONSVORRICHTUNGEN**
COLLECTING RESERVOIR AND METHOD FOR RECOVERING WORKING MEDIUM IN SORPTION DEVICES
RÉCIPIENT DE COLLECTE ET PROCÉDÉ DE RÉCUPÉRATION DE FLUIDE DE TRAVAIL DANS DES DISPOSITIFS DE SORPTION

(30) Priorität: 11.09.2012 DE 102012108465
(43) Veröffentlichungstag der Anmeldung: 22.07.2015
(73) Patentinhaber: InvenSor GmbH, 13355 Berlin (DE)
(72) Erfinder: BRAUNSCHWEIG, Niels, 10119 Berlin (DE); PAULUßEN, Sören, 10405 Berlin (DE); KONTOGEORGOPOULOS, Eythymios, 80639 München (DE)
(74) Vertreter: Hertin und Partner Rechts- und Patentanwälte PartG mbB
(86) Internationale Anmeldenummer: PCT/EP2013/068844
(87) Internationale Veröffentlichungsnummer: WO 2014/041034

(56) Entgegenhaltungen:
- EP-A1- 2 357 433
- EP-A2- 2 489 963
- WO-A2-2012/069048
- JP-A- H1 089 814
- US-A- 5 209 074

## Beschreibung

### Stand der Technik

Sorptionsvorrichtungen, insbesondere Sorptionskältemaschinen sind im Stand der Technik bekannt.

In einem Sorptionssystem befindliche Materialien und Stoffe können ausgasen oder zum Beispiel durch chemische Umwandlung Gase freisetzen. Diese störenden Gase oder Dämpfe verhindern einen schnellen Sorptionsvorgang, da sie bei der Adsorption bzw. Absorption den Zutritt des dampfförmigen Arbeitsmittels zum Sorptionsmittel erschweren sowie bei der Desorption den Zutritt des dampfförmigen Arbeitsmittels zu den Kondensationsflächen verhindern oder erschweren, was beides zu einer extremen Verlangsamung der Kälte- bzw. Wärmeerzeugung führt. Ein erheblicher Leistungsabfall dieser Sorptionssysteme ist die Folge. Als störende Gase bezeichnet man dabei ganz allgemein Stoffe, die den Zutritt des Arbeitsmitteldampfes zum Sorptionsmittel beeinflussen und somit den Sorptionsvorgang behindern (beispielsweise Kohlendioxid, Stickstoff etc.). Die Gase werden auch als Inertgase oder Fremdgase bezeichnet. Diese Stoffe können im Sorptionsmittel vorsorbiert sein, durch chemische Reaktionen freigesetzt werden, aus den vorhandenen Gehäusematerialien entgasen oder über Undichtigkeiten des Systems eintreten. Zusammengefasst besteht bei derartigen Unterdruck-Sorptionsvorrichtungen also prinzipiell das Problem, dass entweder Ausgasungen oder Undichtigkeiten zu einem Druckanstieg und damit zu einer Funktionsbeeinträchtigung der Vorrichtung führen können.

Im Stand der Technik sind unterschiedliche Mittel beschrieben, um die Inertgase aus dem System der Sorptionsmaschine zu entfernen. So offenbart z. B. die DE 44 44 252 B4 ein Verfahren, bei dem ein Bindemittel in die Sorptionsmaschine eingebracht wird. Um für den Sorptionsvorgang das System von störendem Inertgas oder -dampf frei zu halten, so dass in der Dampfphase nur Arbeitsmitteldampf vorhanden ist, wird dem Sorptionssystem ein Bindemittel hinzugefügt. Das Bindemittel hat dabei die Aufgabe, die im Sorptionssystem vorhandenen oder freiwerdenden Inertgase oder -dämpfe zu binden und damit dem Arbeitsmitteldampfraum zu entziehen. Es muss dabei in der Lage sein, soviel Inertgas oderdampf zu binden, wie im Sorptionssystem durch Entgasung oder chemischer Reaktion der darin enthaltenen Stoffe und Materialien frei wird. In einem hermetisch geschlossenen Sorptionssystem kann deshalb nur eine begrenzte Menge an Inertgas oder -dampf anfallen und dies meist zu Beginn der Sorptionszyklen. Das Bindemittel braucht innerhalb dieses Zeitraums nur diese bestimmte Menge an Inertgas zu binden. Als Bindemittel eignen sich prinzipiell alle Stoffe, die in der Lage sind, die in einem Sorptionssystem anfallenden Inertgase oder -dämpfe zu binden. Das Bindemittel sollte dabei aber in der Lage sein, das gebundene Inertgas auch bei systembedingten Temperaturschwankungen nicht wieder freizusetzen. Da die meisten Bindemittel hierzu bei hohen Temperaturen neigen, sollte das Bindemittel an einer Stelle angebracht sein, wo möglichst niedrige Temperaturen und nur leichte Temperaturschwankungen vorherrschen. In einem Sorptionssystem treten im Sorptionsmittelbehälter bei der Sorption sowie der Desorption die höchsten Temperaturen auf. Gemäß der DE 44 44 252 B4 wird das Bindemittel in einem Bereich angebracht, wo die vergleichsweise tieferen Systemtemperaturen vorliegen, z.B. im Kondensator, Verdampfer oder Sammelbehälter.

Weiterhin beschreibt die DE 103 10 748 B3 ein Verfahren zur Entfernung von Inertgasen aus einer Sorptionsmaschine. Hierbei ist eine Zwischenphase vorgesehen, in der nach Ermittlung von Fremdgasen im System (zum Beispiel aufgrund eines Anstieges des Innendrucks oder aufgrund unzureichender Kondensatorleistung) ein Prozess gestartet wird, der diese störenden Gase aus dem Vakuumsystem entfernt. Zunächst wird die Wärmeabfuhr aus dem Kondensator möglichst vollständig unterbunden. Dann wird beispielsweise dem Sorber über einen Brenner Wärme zugeführt. Das dampfförmig aus dem Sorptionsmittel ausgetriebene Arbeitsmittel (vorzugsweise Wasser) kondensiert zuerst an der kältesten Stelle im Vakuumraum und heizt den kompletten, im normalen Betrieb unter Unterdruck stehenden Vakuumraum kontinuierlich auf. Dabei steigt der Druck im System. Überschreitet der Systemdruck den Umgebungsdruck (in der Regel Umgebungsdruck bei 1013 mbar, aber auch andere Konstellationen sind möglich), öffnet eine Ablasseinrichtung (beispiels- und vorzugsweise ein Ventil) und lässt den dampfförmigen Inhalt in die umgebende Atmosphäre abströmen. Gewissermaßen "schiebt" dabei der vom Sorber kommenden Dampf nach und nach die Fremdgase aus. Dabei geht regelmäßig auch ein Teil des Arbeitsmittels verloren. Sind alle Fremdgase aus dem System entfernt, wird die Ablasseinrichtung geschlossen.

Die EP 2 357 433 offenbart eine Vorrichtung, die an eine Sorptionsmaschine angeschlossen ist. Hierbei ist im Bereich des Verflüssigers ein Hohlraum zur Pufferung für Inertgas angeschlossen. Der Hohlraum weist im unteren Bereich ein Eingangsventil auf, wobei das Eingangsventil hohlraumseitig immer mit flüssigem Arbeitsmittel bedeckt ist.

Im Stand der Technik ist außerdem eine Inertgasentfernung beschrieben, bei dem sich das Inertgas im Kondensator einer Sorptionsmaschine, insbesondere einer Adsorptionsmaschine oder in einer separaten Vorrichtung sammelt (Inertgassammelvorrichtung). Eine Inertgassammelvorrichtung wird auch als Inertgasfalle oder Inertgasauffangvorrichtung bezeichnet. Diese Vorrichtung mit Inertgas und Arbeitsmittel wird bis zum Überdruck ausgeheizt und anschließend wird Wasserdampf und Inertgas in die Umgebung abgeblasen. In der US 3555849A wird eine Absorptionsmaschine beschrieben, in welcher nichtkondensierbare Gase regelmäßig aus dem System entfernt werden. Diese Druckschrift befasst sich mit dem Problem, dass Arbeitsmittel durch den Vorgang der Inertgasentfernung verloren geht. Es wird vorgeschlagen, dass das Inertgas über ein Adsorptionsvorgang gereinigt wird und erst anschließend ausgestoßen wird. Somit soll verhindert werden, dass größere Mengen an Arbeitsmittel mit ausströmen.

Ähnliche Lösungen werden in der US 3592017A, US 5806322A und der US 520 9074A vorgeschlagen. Die Dokumente EP 2 489 963 A2, JP H10 89814 A und WO 2012/069048 A2 offenbaren auch Sorptionsvorrichtungen mit Sammelbehälter.

Die Inertgasentfernungsvorrichtungen aus dem Stand der Technik weisen mehrere Nachteile auf. So muss der Wasserdampf kontrolliert abgeblasen werden und somit sammelt sich auch Feuchtigkeit in der Anlage an. Durch diesen wiederholenden Prozess verliert die Sorptionskältemaschine nach und nach an Kältemittel (insbesondere Wasser). Vorrichtungen wird in der DE 103 10748 beschrieben, ignorieren dieses Problem vollständig. Hier wird bei der Herstellung der Vorrichtung von Anfang an eine entsprechend große, an der Lebensdauer der Anlage orientierte Menge an Arbeitsmittel (z. B. Kältemitte.) vorgesehen. Dies erhöht jedoch die Kosten der Anlage und führt außerdem zu Schwierigkeiten, falls die Anlage länger betrieben werden soll, als ursprünglich geplant.

Aufgabe der vorliegenden Erfindung war es demgemäß, eine Vorrichtung und ein Verfahren bereitzustellen, die einen Verlust von Arbeitsmittel verhindern und die Probleme im Stand der Technik überwinden.

### Beschreibung der Erfindung

Gelöst wird die Aufgabe durch die unabhängigen Ansprüche. Vorteilhafte Ausführungen ergeben sich aus den Unteransprüchen.

Mit der Formulierung im Anspruch 1 "in einen Teil der Sorptionsvorrichtung, der von dem Sammelbehälter verschieden ist", ist gemeint, dass das Arbeitsmittel aus dem Sammelbehälter abgeführt wird, die Sorptionsvorrichtung jedoch nicht verlässt.

Inertgas kann dabei auch als Fremdgas bezeichnet werden.

Ein Fachmann weiß, welche Komponenten die Sorptionsvorrichtung weiterhin enthält. Bevorzugt ist außerdem ein Verdampfer enthalten. Außerdem ist bevorzugt ein Adsorber oder ein Absorber enthalten. Anstelle des Adsorbers kann aber der Desorber auch als Adsorber-Desorber-Einheit ausgelegt sein. Ein Desorber im Sinne der Erfindung kann daher auch als Adsorber-Desorber fungieren.

Im Sinne der Erfindung kann der Kondensator auch eine kombinierte Verdampfer/Kondensator-Einheit sein.

Der Erfindung liegt ein generelles Umdenken zugrunde. Herkömmliche Sorptionsvorrichtungen oder Sorptionseinheiten sind möglichst geschlossen beziehungsweise hermetisch abgeschlossene Systeme. Das Bestreben der Fachwelt lag bisher darin, keinerlei Rücklauf in ein solches Vakuumsystem zuzulassen. Dies wird auch durch die bisherigen Lösungsansätze deutlich, da im Stand der Technik bisher versucht wird, das Inertgas vor Ausströmen so gut wie möglich von Arbeitsmittel zu befreien. Es wird also versucht, den Ausstrom von Arbeitsmittel so gering wie möglich zu halten. An eine Rückführung des Arbeitsmittels wurde bisher nicht gedacht. Die Erfindung verfolgt daher einen völlig neuen Ansatz. Ziel ist es nicht, den Verlust des Arbeitsmittels selbst zu lenken, sondern das "verlorene" Arbeitsmittel zurückzuholen. Die Erfindung lässt zu, dass das Arbeitsmittel in einen Bereich ausströmt, in dem Umgebungsdruck herrscht (nämlich im Sammelbehälter). Das Arbeitsmittel wird anschließend aus dem Bereich mit Umgebungsdruck zurück in das Vakuumsystem geholt. Eine solche Vorgehensweise ist im Stand der Technik bisher weder beschrieben noch nahegelegt.

Durch diese Zurückholen werden die vielen und aufwändigen Lösungsansätze aus dem Stand der Technik, die sich damit beschäftigen, das Inertgas von Arbeitsmittel zu befreien, überflüssig.

Der Sammelbehälter ist eine einfache und preisgünstige Vorrichtung, mit der auch ältere Sorptionsvorrichtungen nachgerüstet werden können. Es ist dabei besonders vorteilhafterweise, dass der bevorzugte Sammelbehälter demontierbar ist.

Ein großer Vorteil der Erfindung liegt außerdem darin, dass die Sorptionsvorrichtung über den Sammelbehälter befüllt, nachbefüllt und/oder evakuiert werden kann.

Die Art und der Ort der Anbringung des Sammelbehälters kann beliebig sein, solange das Arbeitsmittel vollständig zurück geführt werde kann.

Bevorzugt ist das Drosselelement ausgewählt aus der Gruppe umfassend Ventile, Durchgangsventil, Eckventil, Schrägsitzventil, Magnetventil, Rückschlagklappe und/oder Schwimmkörper. Das Drosselelement ist bevorzugt in ein Verbindungsmittel integriert und bewirkt eine lokale Verengung des Strömungsquerschnittes. Vorteilhafterweise können unterschiedliche Ventile, die nach ihrer geometrischen Form eingeteilt werden können, in ein Drosselelement integriert sein. Durch die Verwendung der Ventile lässt sich durch Änderung der Nennweite die Durchflussmengen in den Verbindungsmitteln exakt und präzise dosieren, sowie sicher gegen die Umgebung abschließen. Die Drosselelemente können vorteilhafterweise per Hand, per Medium, maschinell oder elektromagnetisch betätigt werden.

Besonders bevorzugt ist, dass das Drosselelement was zwischen dem Sammelbehälter und dem Kondensator angeordnet ist ein Ventil, Magnetventil, Schieber, Rückschlagklappen, Kapillarrohr und/oder eine Membran ist.

Es ist bevorzugt, dass das Drosselelement zwischen dem Kondensator und Sammelbehälter mit einer Steuerung versehen ist, die das Drosselelement öffnet, sobald in dem Kondensator ein höherer Druck als im Sammelbehälter entsteht. Falls das Drosselelement als Schwimmkörper ausgeführt ist, muss das Gewicht des Schwimmkörpers groß genug sein, um eine Öffnung, auf oder an der er aufliegt, sicher verschließt. Während der Desorptionsphase wird der Schwimmkörper von dem in den Sammelbehälter einströmendem Arbeitsmitteldampf angehoben. Der Schwimmkörper kann beispielsweise aus Kunststoff, z. B. Polypropylen gefertigt sein.

Es ist bevorzugt, dass ein Verbindungsmittel den Kondensator mit dem Sammelbehälter verbindet. Dabei ist besonders bevorzugt, dass das Verbindungsmittel mindestens ein Rohr oder eine Durchlassöffnung ist. Das Rohr ist vorzugsweise formschlüssig oder stoffschlüssig mit dem Kondensator und dem Sammelbehälter verbunden. Formschlüssige Verbindungen entstehen vorzugsweise durch das Ineinandergreifen von mindestens zwei Verbindungspartnern. Die formschlüssigen Verbindungen umfassen Schrauben, Nieten, Stifte oder Klemmen. Das Rohr kann beispielsweise mittels Schrauben oder Nieten und entsprechenden Dichtungen mit Komponenten der Sorptionsvorrichtung und dem Sammelbehälter verbunden sein.

Weiterhin kann das Verbindungsmittel durch stoffschlüssige Mittel an dem Kondensator und dem Sammelbehälter angebracht sein. Stoffschlüssige Verbindungen werden durch atomare oder molekulare Kräfte zusammengehalten. Sie sind gleichzeitig nicht lösbare Verbindungen, die sich nur durch Zerstörung wieder lösen lassen. Stoffschlüssige Verbindungen umfassen Löten, Schweißen oder Kleben.

Arbeitsmittel kann im Sinne der Erfindung bevorzugt ein Fluid oder ein Kältemittel sein. Besonders bevorzugt ist der Einsatz von Wasser als Arbeitsmittel.

Besonders bevorzugt ist die Sorptionsvorrichtung, wobei diese außerdem eine Inertgasfalle umfasst und der Sammelbehälter über diese Inertgasfalle mit dem Kondensator verbunden ist. Es ist aber auch bevorzugt, dass der Sammelbehälter einen Teil der Inertgasfalle ist. Das bedeutet, dass der Sammelbehälter nicht zwangsläufig ein separates Bauteil darstellen muss.

Hierbei handelt es sich um die beschriebene indirekte Verbindung von Sammelbehälter und Kondensator. Diese indirekte Verbindung wird bevorzugt durch die Inertgasfalle verwirklicht. Der Sammelbehälter ist daher über die Inertgasfalle mit dem Kondensator verbunden. Bei dieser Ausführungsform befindet sich mindestens ein beschriebenes Verbindungsmittel zwischen dem Sammelbehälter und der Inertgasfalle und mindestens ein Verbindungsmittel zwischen dem Kondensator und der Inertgasfalle.

Die zuvor beschriebenen bevorzugten Ausführungsformen zu Drosselelementen und Verbindungen sind auch für diese Variante der Erfindung bevorzugt.

Diese Ausführungsform ist besonders vorteilhaft, da die Vorteile der Inertgasfalle mit den Vorteilen der Rückführung durch den Sammelbehälter kombiniert werden. Durch die Inertgasfalle, bei der es sich bevorzugt um eine Inertgasfalle gemäß der WO 2012/069048 handelt, ist für die Evakuierung der Fremdgase keine Vakuumpumpe, Bindestoffe oder nennenswerter Energieaufwand notwendig. Die Evakuierung der Fremdgase kann im laufenden, kontinuierlichen Betrieb der Sorptionsvorrichtung vorgenommen werden. Es kann jedoch auch vorteilhaft sein, die Fremdgase in der Inertgasfalle zu sammeln, bis ein bestimmter Gesamtdruck im Behälter vorliegt und erst dann die Gase aus dem Behälter zu entfernen. Durch die erreichende Selbstevakuierung der Maschine kann Wartungsbedarf stark reduziert werden.

Auch bevorzugt ist die Sorptionsvorrichtung, wobei ein erstes Drosselelement zwischen Inertgasfalle und dem Sammelbehälter angeordnet ist und ein zweites Drosselelement zwischen Kondensator und Inertgasfalle angeordnet ist. Diese Ausführungsform ist bevorzugt, da so sowohl das Einströmen des Inertgases in die Falle und auch das Ausströmen in den Sammelbehälter reguliert werden können.

Besonders bevorzugt ist, dass das Drosselelement was zwischen dem Sammelbehälter und der Inertgasfalle angeordnet ist ein Ventil, Magnetventil, Schieber, Rückschlagklappen, Kapillarrohr und/oder eine Membran ist. Diese Ausführungsform ist vorteilhaft, da diese Drosselelemente einen effektiven Verschluss verwirklichen.

Es ist auch bevorzugt, dass die Intergasfalle beheizbar ist. Durch ein Aufheizen der Intergasfalle steigt somit der Druck im inneren der Falle an. Dabei bleibt der erreichte Druck im Vakuumbereich. Dies ist vorteilhaft, da die Menge der angesaugten Luft insbesondere von der Druckdifferenz zwischen der Sorptionsvorrichtung bzw. der Inertgasfalle und der Umgebung abhängt. Bleibt der erreichte Druck im Vakuumbereich, so wird die Druckdifferenz erheblich reduziert.

Weiterhin bevorzugt ist die Sorptionsvorrichtung, wobei der Sammelbehälter interne Prallbleche umfasst. Dies ist besonders vorteilhaft um eine Kondensation von dampfförmigen Arbeitsmittel im Sammelbehälter zu erreichen. Durch die Prallbleche hat der Dampf des Arbeitsmittels einen langen und indirekten Weg nach außen. Der Dampf muss zusätzlich durch die bereits gesammelte Flüssigkeit strömen. Auch bevorzugt sind einer andere Art von technischen Mitteln um die in der Strömung mitgerissenen Tropfen abzuscheiden. Der Fachmann kennt andere Möglichkeiten mit der Tropfen aus dem Dampf abgeschieden werden können, ohne dabei selbst erfinderisch tätig zu werden.

Eine Sorptionsvorrichtung kann im Sinne der Erfindung eine Adsorptionsmaschine, insbesondere eine Adsorptionskältemaschine oder Adsorptionswärmepumpe sein. Eine Sorptionsvorrichtung kann im Sinne der Erfindung auch eine Absorptionsmaschine sein. Das Problem der Inertgasentfernung und dem damit verbunden Verlust von Arbeitsmitteln ist ein grundsätzliches Problem von Sorptionsprozessen. Der Behälter kann daher sowohl für Adsorptions -, als auch für Absorptionsanlagen vorteilhaft eingesetzt werden. Es war völlig überraschend, dass der Sammelbehälter universell einsetzbar ist und an unterschiedliche Anlagenkonfigurationen anpassbar ist. Vorteilhafterweise kann der Sammelbehälter für 1-Kammer-Systeme, aber auch für 2- oder Mehrkammer-Systeme verwendet werden. Außerdem kann er einfach und schnell auf andere Typen von Sorptionsmaschinen angepasst werden. Die Maschinen müssen hierfür im Wesentlichen nicht apparativ verändert werden. Die Anlagenkonfiguration bezeichnet im Sinne der Erfindung bevorzugt die Konfiguration der Sorptionsvorrichtung, das heißt beispielsweise die interne hydraulische Verschaltung der Komponenten der Sorptionsvorrichtung, die interne kältemittelseitige Verschaltung der Komponenten oder den geänderten Grundaufbau des Sorptionsvorrichtung (z. B. Anzahl der Adsorber, Betrieb des Verdampfers, des Kondensators, usw.).

Die Adsorptionskältemaschine besteht mindestens aus einem Adsorber und einem Desorber und/oder einer Ad-/Desorber-Einheit, einem Verdampfer, einem Kondensator und/oder einer kombinierten Verdampfer/Kondensator-Einheit, die in einem gemeinsamen Behälter oder in getrennten Behältern untergebracht sind, welche dann mit Rohren o. ä. für die Kältemittelströmung miteinander verbunden sind. Der Vorteil der Sorptionsmaschinen gegenüber konventioneller Wärmepumpentechnik liegt darin, dass der Ablauf der Adsorption/Desorption allein durch die Temperierung des Sorptionsmittels erfolgt. Somit kann der Behälter der Adsorptionsmaschine hermetisch und gasdicht abgeschlossen sein. Bei Verwendung von beispielsweise Wasser als Kältemittel arbeitet die Adsorptionskältemaschine vorzugsweise im Unterdruckbereich.

Die in einer Adsorptionsmaschine stattfindende Adsorption beschreibt einen physikalischen Prozess, bei dem sich ein gasförmiges Arbeitsmittel, bevorzugt ein Kältemittel (beispielsweise Wasserdampf) an einen Feststoff anlagert. Die Desorption des Kältemittels, das heißt das Lösen des Kältemittels von dem Feststoff, benötigt wiederum Energie. In einer Adsorptionskältemaschine wird das Kältemittel, welches bei niedriger Temperatur und niedrigem Druck Wärme aufnimmt und bei höherer Temperatur und höherem Druck Wärme abgibt, so gewählt, dass mit der Ad- beziehungsweise Desorption eine Aggregatzustandsänderung einhergeht. Als Adsorptionsmittel sind im Stand der Technik Stoffe beschrieben, die feinporös sind und demzufolge eine sehr große innere Oberfläche besitzen. Vorteilhafte Materialien sind Aktivkohle, Zeolithe, Aluminiumoxid oder Silikagel, Aluminiumphosphate, Silika- Aluminiumphosphate, Metall-Silika-Aluminiumphosphate, Mesostruktur Silikate, Metall-organische Gerüste und/oder mikroporöses Material, umfassend mikroporöse Polymere. Das Adsorptionsmaterial kann vorteilhafterweise unterschiedlich appliziert sein, das heißt es kann sich um eine Schüttung, eine Klebung und/oder Kristallisation handeln. Durch diese unterschiedlichen Applizierungsarten kann die Adsorptionsmaschine an unterschiedliche Anforderungen angepasst werden. So kann die Maschine an den Standort oder das Kältemittel angepasst werden. Außerdem ist die Schichtdicke des Adsorptionsmaterials für die Leistung der Adsorptionsmaschine entscheidend.

Der Sammelbehälter ist vorzugsweise aus Metall und/oder Kunststoff gefertigt. Es hat sich herausgestellt, dass hierdurch ein kostengünstiger Sammelbehälter zum Auffangen von Arbeitsmittel zur Verfügung gestellt werden kann, der auch hohen und wechselnden Drücken und Temperaturen standhalten kann.

Der Sammelbehälter kann dabei an eine bestehende Sorptionseinheit angeschlossen werden. Der Sammelbehälter wird bevorzugt an eine Inertgasfalle (auch Falle genannt) angeschlossen. Der Sammelbehälter kann dabei aber auch Teil der Sorptionsvorrichtung oder einer Vakuumpumpe sein, wobei dieser Teil z.B. durch eine Trennwand abgetrennt ist. Die Größe des Sammelbehälters ist für seine Funktion nicht entscheidend und bestimmt nur die Häufigkeit des Entleerungsprozesses.

Die Form des Sammelbehälters ist vorzugweise derart gewählt, dass das eingeströmte Arbeitsmittel (z. B. Wasser) vollständig zurückfließen kann. Zum Beispiel ist eine trichterförmige Form bevorzugt. Es kann vorteilhaft sein, wenn der Behälter konisch ausgestaltet ist, wobei Experimente gezeigt haben, dass auch sonstige Formen des Behälters funktionsfähig sind und somit verwendet werden können.

Erfindungsgemäß weist der Sammelbehälter eine Öffnung fauf. Der Vorteil liegt darin, dass dadurch ein Druckausgleich mit der Umgebung gewährleistet ist. Somit entsteht kein Überdruck wenn das Inertgas mit Arbeitsmittel in den Sammelbehälter einströmt und kein Unterdruck wenn das Kondensat zurück gesaugt beziehungsweise geführt wird. Durch die Öffnung wird der Druck in dem Sammelbehälter immer auf Umgebungsdruckniveau gehalten.

Es ist dabei bevorzugt, dass die Öffnung möglichst klein gehalten ist. Somit wird sichergestellt, dass das gesamte Arbeitsmittel aus dem Sammelbehälter zurückgeführt werden kann. Die einzigen Arbeitsmittelverluste würden also durch die Verdunstung aus dem Sammelbehälter zur Umgebung entstehen. Dies wird durch eine entsprechend sehr kleine Öffnung zur Umgebung minimiert beziehungsweise unterbunden.

Es ist besonders bevorzugt, dass das Arbeitsmittel in flüssiger Form zurückgeführt wird. Der Dampf des Arbeitsmittels kondensiert vorteilhafterweise an der inneren Oberfläche des Sammelbehälters. Um die Kondensation zu unterstützen beziehungsweise zu verstärken kann eine verbesserte Abfuhr der Kondensationswärme sinnvoll sein. Dies wird vorteilhafterweise wie folgt verwirklicht:
- durch Kühlrippen (passive Kühlung, Naturkonvektion) und/oder
- durch ein Gebläse (aktive Kühlung, Zwangskonvektion) und/oder
- durch einen Anschluss an eine Kältequelle (Kompressions-, oder SorptionsKältemaschine, Peltierelement, insbesondere aber auch an der Verdampfer der Sorptionsvorrichtung oder durch Verdampfungskühlung innerhalb der Inertgasfalle) und/oder
- durch Erhöhung der thermische Masse des Sammelbehälters

Außerdem bevorzugt ist, dass die Sorptionsvorrichtung mehrere Sammelbehälter umfasst, welche hintereinander angeordnet sind. Die Erfindung kann somit auch mehrstufig aufgeführt werden, sodass mehrere Sammelbehälter hintereinander oder mehrere Intergasfallen seriell oder parallel mit einem oder mehreren Sammelbehältern verschaltet werden. Diese Ausführungsform gewährleistet eine besonders effektive Entfernung der Inertgase unter gleichzeitiger nahezu vollständiger Rückgewinnung des mit austretenden Arbeitsmittels.

In einer weiteren bevorzugten Ausführungsform betrifft die Erfindung ein Verfahren zur Rückgewinnung von Arbeitsmittel bei einem Sorptionsprozess einer beschriebenen Sorptionsvorrichtung, wobei ausgetretenes Arbeitsmittel, welches bei einer Entfernung von Inertgasen entwichen ist, in einem Sammelbehälter gesammelt wird und von dem Sammelbehälter in einen anderen Teil der Sorptionsvorrichtung zurückgeführt wird.

Es ist dabei bevorzugt, dass in dem Sammelbehälter Umgebungsdruck herrscht. So wird gewährleistet, dass das Inertgas über eine Öffnung im Sammelbehälter entweichen kann.

Bevorzugt umfasst das Verfahren die folgenden Schritte:
a. Einbringung eines dampfförmigen Arbeitsmittels aus dem Desorber oder der Desorber-Einheit in den Kondensator, wobei das Arbeitsmittel in dem Kondensator zumindest teilweise kondensiert und sich das Inertgas im Kondensator sammelt,
b. Erhöhen des Drucks im Kondensator, bevorzugt durch Aufheizen,
c. Öffnung eines, zwischen dem Kondensator und dem Sammelbehälters angeordneten Drosselelements, wobei Inertgas und Arbeitsmittel aus dem Kondensator in den Sammelbehälter strömen,
d. Auffangen des Arbeitsmittels im Sammelbehälter,
e. Rückführen des Arbeitsmittels in einen Teil der Sorptionsvorrichtung, der von dem Sammelbehälter verschieden ist.

Im Stand der Technik würde das Arbeitsmittel mit dem Inertgas in die Umgebung ausströmen. Die übliche Zielsetzung war es den Verlust von Arbeitsmittel zu minimieren, in dem so wenig Arbeitsmittel wie möglich mit dem Inertgas ausströmen sollte. Die Erfindung löst das Problem aber anders. Es ist dabei bevorzugt, dass Arbeitsmittel ausströmt, da dieses von dem Sammelbehälter aufgefangen wird. Solange sichergestellt ist, dass das Arbeitsmittel zurückgeführt wird, verliert das System kein Arbeitsmittel.

Durch das Aufheizen des Kondensators in Schritt b. wird der Druck erhöht, sodass das Inertgas bei Öffnen des Drosselelements in den Sammelbehälter ausströmen kann.

Wenn eine Sorptionsvorrichtung mit Inertgasfalle verwendet wird, umfasst das Verfahren bevorzugt die folgenden Schritte:
(i) Kühlung der Inertgasfalle durch ein Kühlelement auf eine Temperatur, die niedriger, gleich oder ähnlich der des Kondensators ist,
(ii) Einbringung eines dampfförmigen Arbeitsmittels aus dem Desorber oder der Desorber-Einheit in den Kondensator, wobei das Arbeitsmittel in dem Kondensator zumindest teilweise kondensiert und sich das Inertgas im Kondensator sammelt,
(iii) Öffnen des, zwischen dem Kondensator und der Inertgasfalle angeordneten Drosselelements, wobei Inertgas und dampfförmiges Arbeitsmittel aus dem Kondensator in die Inertgasfalle strömt,
(iv) Aufheizen der Inertgasfalle,
(v) Öffnen des, zwischen der Inertgasfalle und dem Sammelbehälter angeordneten Drosselelements, durch welches das Inertgas und Arbeitsmittel aus der Inertgasfalle in den Sammelbehälter ausströmen,
(vi) Auffangen des Arbeitsmittels in dem Sammelbehälter,
(vii) Rückführung des Arbeitsmittels, in einen Teil der Sorptionsvorrichtung, der von dem Sammelbehälter verschieden ist.

Die Schritte gleichen sich im Wesentlichen. Jedoch wird das Inertgas hier zunächst in die Inertgasfalle geführt. In dieser wird dann durch Aufheizen der Druck erhöht, sodass das Inertgas bei Öffnen des Drosselelements in den Sammelbehälter ausströmen kann.

Bevorzugt wird das Arbeitsmittel von dem Sammelbehälter zurück in die Inertgasfalle oder den Kondensator geleitet. Die Rückführung kann auch ein Zurücksaugen, zum Beispiel durch Unterdruck sein.

Die wesentlichen Verfahrensschritte können in beiden Fällen wie folgt dargestellt werden:
Aus der Inertgasfalle oder dem Kondensator strömt Arbeitsmittel aus. Dieses ausströmende Arbeitsmittel kann entweder in Form von Tropfen oder als Dampf vorliegen. Diese Tropfen oder der Dampf werden von dem Sammelbehälter aufgefangen. Dort kondensiert der Dampf. Nach einer bestimmten Zeit wird das Arbeitsmittel zurück in die Sorptionsvorrichtung geführt. Die Rückführung findet bevorzugt dann statt, wenn eine bestimmte Menge an Arbeitsmittel im Sammelbehälter erreicht wird. Dies kann z. B. derart erfolgen, dass die im Sammelbehälter vorliegende Menge von Arbeitsmittel gemessen wird oder die Rückführung in bestimmten Zeitabständen (oder Zyklen) erfolgt, wobei diese auch mit der Fahrweise der Inertgasfalle synchronisiert sein kann.

In diesem Sammelbehälter wird beim Ausströmen des Inertgases das automatisch mit ausströmende Arbeitsmittel (bevorzugt Kältemittel, besonders bevorzugt Wasser) gesammelt. Das Arbeitsmittel kann in Form von Tropfen oder Dampf aufgefangen werden, wobei der Dampf dann in dem Sammelbehälter kondensiert. In einem zweiten Schritt wird das Wasser dann in das Sorptionssystem zurückgeführt.

Während der Rückführung wird eventuell beziehungsweise sehr wahrwahrscheinlich auch Luft und/oder Inertgas in die System, vor allem in den Kondensator oder die Inertgasfalle gesaugt beziehungsweise geleitet. Dies ist aber nicht nachteilig, da das Inertgas öfter abgelassen wird, als das Arbeitsmittel zurückgeführt wird. Zum Beispiel kann ein Inertgasausstrom zehnmal stattfinden und anschließend eine Arbeitsmittelrückführung, sodass ein neunfacher "Netto-Ausstrom" von Inertgas stattgefunden hat.

Auf diese Weise wird das Arbeitsmittel von mehreren Inertgasentfernungsprozeduren zurück gewonnen. Der bevorzugte Sammelbehälter ist mit unterschiedlichen im Stand der Technik bekannten Sorptionsmaschinen kompatibel und kann universell eingesetzt werden. Die gesaugte Luft kann entweder direkt nach der Arbeitsmittelrückführung nach dem klassischen Verfahren entfernt werden oder im System verbleiben und insbesondere nach und nach mit dem neu entstehenden Inertgas entfernt werden. Die letzte Möglichkeit gilt bevorzugt nur für den Fall, dass die gesaugte Luft minimal ist und die Bilanz entferntes Inertgas - gesaugte Luft positiv ist.

Die Menge der angesaugten Luft hängt insbesondere von der Druckdifferenz zwischen dem Teil der Sorptionsvorrichtung in den das Arbeitsmittel zurückgeführt wird (z.B. Kondensator oder Inertgasfalle) und der Umgebung ab. Bei Raumtemperatur liegt der Druck der Inertgasfalle z.B. bei etwa 50 mbar, während der Umgebungsdruck 1000mbar ist. Eine Druckdifferenz von 950 mbar führt dazu, dass beim Öffnen des Drosselelements das Arbeitsmittel von dem Sammelbehälter abgesaugt wird. Allerdings wird bei dieser relativ hohen Druckdifferenz auch eine größere Menge Luft mit gesaugt.

Es ist daher bevorzugt, dass der Teil der Sorptionsvorrichtung in den das Arbeitsmittel strömen soll, also z.B. die Inertgasfalle, aufgeheizt wird. Dabei ist jedoch darauf zu achten, dass es vorteilhaft ist, dass trotzdem ein Unterdruck bestehen bleibt, damit das Arbeitsmittel durch den Unterdruck zurückgeführt werden kann. Es sind aber auch andere Rückführmethoden denkbar.

Es hat sich als besonders vorteilhaft erwiesen, den Teil der Sorptionsvorrichtung in den das Arbeitsmittel zurückgeführt wird, also z.B. die Inertgasfalle, auf 50° C bis 90° C, besonders bevorzugt 80 °C zu erhitzen. Der Druck steigt dadurch auf etwa 900 mbar an. Die Druckdifferenz zum Umgebungsdruck beträgt also nur noch in etwa 100 mbar anstatt 950 mbar.

Es ist besonders bevorzugt, dass Teil der Sorptionsvorrichtung in den das Arbeitsmittel zurückgeführt wird, also z.B. die Inertgasfalle oder auch der Kondensator, mit einem Drucksensor versehen ist. Dieser Sensor erkennt den Druckanstieg durch das Öffnen des Drosselelements. Wenn ein Druckausgleich stattgefunden hat, ist das Arbeitsmittel vollständig oder nahezu vollständig zurückgeführt worden. Diese Ausführungsform ist besonders vorteilhaft, da so auf einfache Weise festgestellt werden kann, wann die Rückführung abgeschlossen wurde.

Es wird insbesondere ein Sammelbehälter oder einen Bereich der Inertgasfalle für das Arbeitsmittel, insbesondere das Kältemittel bereitgestellt, wobei dieser mit einer Inertgasfalle oder dem System der Sorptionsmaschine, bevorzugt Adsorptionsmaschine und besonders bevorzugt Adsorptionskältemaschine verbunden ist.

In einer weiteren bevorzugten Ausführungsform betrifft die Erfindung die Verwendung eines der beschriebenen Sammelbehältern zum Sammeln und Rückführen von Arbeitsmittel bei einem Sorptionsprozess, wobei der Sammelbehälter an eine Sorptionseinheit angebracht wird und wobei das Arbeitsmittel beim Entfernen von Inertgas aus der Sorptionseinheit in den Sammelbehälter strömt und wobei das ausgeströmte Arbeitsmittel in die Sorptionseinheit zurückgeführt wird.

Als Sorptionseinheit wird bevorzugt eine Sorptionsvorrichtung ohne Sammelbehälter bezeichnet. Ein Fachmann weiß, welche Komponenten in einer solchen Sorptionseinheit enthalten sein müssen, um einen Sorptionsprozess durchführen zu können.

Ein vorteil der Erfindung ist, dass der Sammelbehälter Kann dabei an eine bestehende Sorptionseinheit angeschlossen werden. Der Sammelbehälter wird bevorzugt an eine Inertgasfalle angeschlossen.

Der Sammelbehälter ist eine einfache und preisgünstige Vorrichtung, mit der auch ältere Sorptionseinheiten nachgerüstet werden können. Es ist dabei besonders vorteilhafterweise, dass der bevorzugte Sammelbehälter demontierbar ist.

Besonders bevorzugt ist die Verwendung des Sammelbehälters wobei der Sammelbehälter an eine Adsorptionskältemaschine angeschlossen wird. Die Verwendung bei solchen Sorptionsvorrichtungen hat sich als besonders vorteilhaft erwiesen, da so große Mengen an Arbeitsmittel eingespart werden können.

### Figuren

Die Erfindung wird anhand von beispielhaften Figuren erläutert, ohne jedoch auf diese beschränkt zu sein, da die Ausgestaltung des Sammelbehälters und des Systems nur schematisch dargestellt ist. Vor allem ist in den Abbildungen immer nur die Variante eine abgetrennten Sammelbehälters an einer abgetrennten Inertgasfalle gezeigt. Es können aber auch ein oder beide Elemente in der Sorptionsvorrichtung angeordnet sein. Außerdem zeigen die Figuren nicht die gesamte Sorptionsvorrichtung.

Es zeigen:

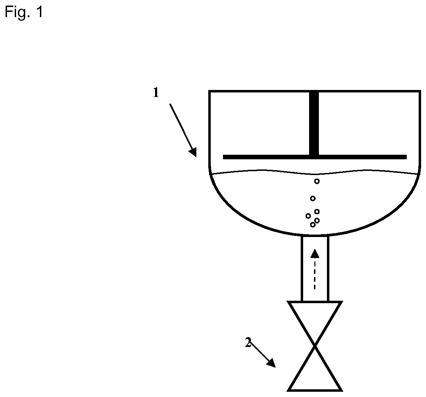

- Figur 1: ein bevorzugten Sammelbehälter **1**, der mit einem Drosselelement **2** verbunden ist.

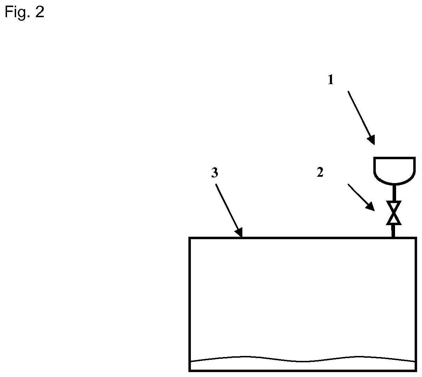

- Figur 2,: ein bevorzugten Sammelbehälter **1**, der über ein Drosselelement **2** mit einem Kondensator **3** verbunden ist.

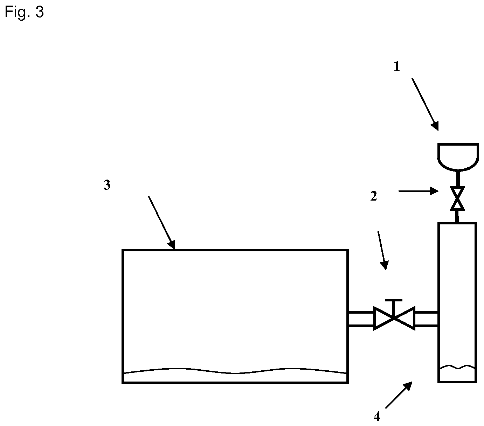

- Figur 3: einen bevorzugten Sammelbehälter **1**, der über eine Inertgasfalle **4** mit einem Kondensator **3** verbunden ist. Dabei ist ein Drosselelement **2** zwischen den Sammelbehälter **1** und der Inertgasfalle **4** angeordnet und ein weiteres Drosselelement **2** befindet sich zwischen der Inertgasfalle **4** und dem Kondensator **3.**

### Bezugszeichenliste

- 1: Sammelbehälter
- 2: Drosselelement
- 3: Kondensator
- 4: Inertgasfalle

## Patentansprüche

1. Sorptionsvorrichtung, umfassend mindestens einen Sammelbehälter (1), einen Kondensator (3), einen Desorber und ein Arbeitsmittel, wobei der Sammelbehälter (1) direkt oder indirekt mit dem Kondensator (3) verbunden ist und wobei mindestens ein Drosselelement (2) dem Sammelbehälter (1) dem Kondensator (3) angeordnet ist, wobei in dem Sammelbehälter (1) Arbeitsmittel gesammelt wird, welches bei Ausströmen von Inertgas entweicht und wobei dieses Arbeitsmittel aus dem Sammelbehälter (1) zurückführbar ist, in einen Teil der Sorptionsvorrichtung, der von dem Sammelbehälter (1) verschieden ist, **dadurch gekennzeichnet, dass** der Sammelbehälter (1) mindestens eine Öffnung zur Umgebung aufweist, damit ein ständiger Druckausgleich gewährleistet ist und im Sammelbehälter (1) immer Umgebungsdruck herrscht, wodurch kein Überdruck entsteht wenn das Inertgas mit Arbeitsmittel in den Sammelbehälter (1) einströmt und kein Unterdruck entsteht wenn das Kondensat zurück gesaugt wird.

2. Sorptionsvorrichtung nach Anspruch 1, wobei die Sorptionsvorrichtung außerdem eine Inertgasfalle (4) umfasst und der Sammelbehälter (1) über diese Inertgasfalle (4) mit dem Kondensator (3) verbunden ist.

3. Sorptionsvorrichtung nach Anspruch 2, wobei ein erstes Drosselelement (2) zwischen Inertgasfalle (4) und dem Sammelbehälter (1) angeordnet ist und ein zweites Drosselelement (2) zwischen dem Kondensator (3) und der Inertgasfalle (4) angeordnet ist.

4. Sorptionsvorrichtung nach mindestens einem der vorhergehenden Ansprüche, wobei der Sammelbehälter (1) interne Prallbleche umfasst.

5. Sorptionsvorrichtung nach mindestens einem der vorhergehenden Ansprüche, wobei die Sorptionsvorrichtung eine Adsorptionsvorrichtung, bevorzugt eine Adsorptionskältemaschine ist.

6. Sorptionsvorrichtung nach mindestens einem der vorhergehenden Ansprüche, wobei die Sorptionsvorrichtung mehrere Sammelbehälter (1) umfasst, welche hintereinander angeordnet sind.

7. Sorptionsvorrichtung nach mindestens einem der vorhergehenden Ansprüche, wobei der Sammelbehälter (1) aus Metall und/oder Kunststoff hergestellt ist.

8. Sorptionsvorrichtung nach mindestens einem der vorhergehenden Ansprüche, wobei der Sammelbehälter (1) eine Kältequelle und/oder Kühlrippen umfasst.

9. Verfahren zur Rückgewinnung von Arbeitsmittel bei einem Sorptionsprozess einer Sorptionsvorrichtung gemäß mindestens einem der vorhergehenden Ansprüche, wobei ausgetretenes Arbeitsmittel, welches bei einer Entfernung von Inertgasen entwichen ist, in dem Sammelbehälter (1) gesammelt wird und von aus dem Sammelbehälter (1) in einen Teil der Sorptionsvorrichtung, der von dem Sammelbehälter (1) verschieden ist, zurückgeführt wird.

10. Verfahren nach dem vorhergehenden Anspruch, umfassend die folgenden Schritte:
a. Einbringung eines dampfförmigen Arbeitsmittels aus dem Desorber in den Kondensator (3), wobei das Arbeitsmittel in dem Kondensator (3) zumindest teilweise kondensiert und sich das Inertgas im Kondensator (3) sammelt,
b. Erhöhen des Drucks im Kondensator (3), bevorzugt durch Aufheizen,
c. Öffnung eines, zwischen dem Kondensator (3) und dem Sammelbehälters (1) angeordneten Drosselelements (2), wobei Inertgas und Arbeitsmittel aus dem Kondensator (3) in den Sammelbehälter (1) strömt,
d. Auffangen des Arbeitsmittels im Sammelbehälter (1),
e. Rückführen des Arbeitsmittels in einen Teil der Sorptionsvorrichtung, der von dem Sammelbehälter (1) verschieden ist.

11. Verfahren nach Anspruch 9, wobei der Sammelbehälter (1) eine Inertgasfalle (4) mit dem Kondensator (3) verbunden ist und wobei das Verfahren die folgenden Schritte umfasst:
(i) Kühlung der Inertgasfalle durch ein Kühlelement auf eine Temperatur, die niedriger, gleich oder ähnlich der des Kondensators (3) ist,
(ii) Einbringung eines dampfförmigen Arbeitsmittels aus dem Desorber oder der Desorber-Einheit in den Kondensator (3), wobei das Arbeitsmittel in dem Kondensator (3) zumindest teilweise kondensiert und sich das Inertgas im Kondensator (3) sammelt,
(iii) Öffnen des, zwischen dem Kondensator (3) und der Inertgasfalle (4) angeordneten Drosselelements (2), wobei Inertgas und dampfförmiges Arbeitsmittel aus dem Kondensator (3) in die Inertgasfalle strömt,
(iv) Aufheizen der Inertgasfalle,
(v) Öffnen des, zwischen der Inertgasfalle und dem Sammelbehälter (1) angeordneten Drosselelements (2), durch welches das Inertgas und Arbeitsmittel aus der Inertgasfalle (4) in den Sammelbehälter (1) ausströmen,
(vi) Auffangen des Arbeitsmittels in dem Sammelbehälter (1),
(vii) Rückführung des Arbeitsmittels, in einen Teil der Sorptionsvorrichtung, der von dem Sammelbehälter (1) verschieden ist.

12. Verwendung eines Sammelbehälters (1) zum Sammeln und Rückführen von Arbeitsmittel bei einem Sorptionsprozess, wobei der Sammelbehälter (1) mindestens
eine Öffnung zur Umgebung aufweist, damit ein ständiger Druckausgleich gewährleistet ist und Sammelbehälter (1) immer Umgebungsdruck herrscht, wodurch kein Überdruck entsteht wenn Inertgas mit Arbeitsmittel in den Sammelbehälter (1) einströmt und kein Unterdruck entsteht wenn Kondensat zurück gesaugt wird, und wobei der Sammelbehälter (1) an eine Sorptionseinheit angebracht wird
und wobei
das Arbeitsmittel beim Entfernen von Inertgas aus der Sorptionseinheit in den Sammelbehälter (1) strömt und wobei
das ausgeströmte Arbeitsmittel in die Sorptionseinheit zurückgeführt wird.

13. Verwendung nach Anspruch 12 , wobei das Arbeitsmittel im Sammelbehälter (1) kondensiert, und bevorzugt, wobei das Arbeitsmittel in flüssiger Form zurückgeführt wird.

14. Verwendung nach mindestens einem der Ansprüche 12 oder 13, wobei der Sammelbehälter (1) mit einer Inertgasfalle (4) der Sorptionseinheit verbunden ist.

15. Verwendung nach mindestens einem der Ansprüche 12 bis 14, wobei das Arbeitsmittel durch Unterdruck zurückgesaugt wird.

## Claims

1. A sorption device comprising at least one collecting reservoir (1), a condenser (3), a desorber and a working medium, wherein the collecting reservoir (1) is directly or indirectly connected to the condenser (3), and wherein at least one throttle element (2) is provided between the collecting reservoir (1) and the condenser (3), wherein working medium that escapes during the flowing out of inert gas is collected in the collecting reservoir (1), and wherein
said working medium can be returned from the collecting reservoir (1) into a part of the sorption device that is different from the collecting reservoir (1), **characterized in that** the collecting reservoir (1) has at least one opening to the surrounding, to ensure continuous pressure equalisation and the pressure in the collecting reservoir (1) is always maintained at an ambient pressure level, so that no positive pressure is generated if the inert gas with working medium flows into the collecting reservoir (1) and no vacuum pressure is generated, if the condensate is sucked back.

2. The sorption device as claimed in claim 1, wherein the sorption device moreover comprises an inert gas trap (4) and the collecting reservoir (1) is connected to the condenser (3) via said inert gas trap (4).

3. The sorption device as claimed in claim 2, wherein a first throttle element (2) is provided between the inert gas trap (4) and the collecting reservoir (1) and a second throttle element (2) is provided between the condenser (3) and the inert gas trap (4).

4. The sorption device as claimed in at least one of the preceding claims, wherein the collecting reservoir (1) comprises internal baffle plates.

5. The sorption device as claimed in at least one of the preceding claims, wherein the sorption device is an adsorption device, preferably an adsorption cooling machine.

6. The sorption device as claimed in at least one of the preceding claims,
wherein the sorption device comprises a plurality of collecting reservoirs (1) arranged one after the other.

7. The sorption device as claimed in at least one of the preceding claims, wherein the collecting reservoir (1) is made from metal and/or plastic.

8. The sorption device as claimed in at least one of the preceding claims, wherein the collecting reservoir (1) comprises a coolant source and/or cooling fins.

9. A method for recovering working medium in a sorption process of a sorption device as claimed in at least one of the preceding claims, wherein
exited working medium that has escaped during the removal of inert gases is collected in the collecting reservoir (1) and is returned from the collecting reservoir (1) into a part of the sorption device that is different from the collecting reservoir (1).

10. The method as claimed in the preceding claim, comprising the following steps:
a. introducing a vaporous working medium from the desorber into the condenser (3), wherein the working medium at least partially condenses in the condenser (3) and the inert gas collects in the condenser (3),
b. increasing the pressure in the condenser (3), preferably by heating,
c. opening a throttle element (2) provided between the condenser (3) and the collecting reservoir (1), wherein the inert gas and the working medium flow from the condenser (3) into the collecting reservoir (1),
d. collecting the working medium in the collecting reservoir (1),
e. returning the working medium into a part of the sorption device that is different from the collecting reservoir (1).

11. The method as claimed in claim 9, wherein
the collecting reservoir (1) is connected to the condenser (3) via an inert gas trap (4), and wherein the method comprises the following steps:
(i) cooling the inert gas trap (4) using a cooling element to a temperature that is lower, the same or similar to that of the condenser (3),
(ii) introducing a vaporous working medium from the desorber or the desorber unit into the condenser (3), wherein the working medium at least partially condenses in the condenser (3) and the inert gas collects in the condenser (3),
(iii) opening the throttle element (2) provided between the condenser (3) and the inert gas trap (4), wherein the inert gas and vaporous working medium flow from the condenser (3) into the inert gas trap (4),
(iv) heating the inert gas trap (4),
(v) opening the throttle element (2) provided between the inert gas trap (4) and the collecting reservoir (1), through which the inert gas and the working medium flow out from the inert gas trap (4) into the collecting reservoir (1),
(vi) collecting the working medium in the collecting reservoir (1),
(vii) returning the working medium into a part of the sorption device that is different from the collecting reservoir (1).

12. The use of a collecting reservoir (1) for collecting and returning working medium in a sorption process, wherein
the collecting reservoir (1) has at least one opening to the surrounding, to ensure continuous pressure equalisation and the pressure in the collecting reservoir (1) is always maintained at an ambient pressure level, so that no positive pressure is generated if the inert gas with working medium flows into the collecting reservoir (1) and no vacuum pressure is generated, if the condensate is sucked back and wherein the collecting reservoir (1) is attached to a sorption unit and wherein the working medium flows, during the removal of inert gas from the sorption unit, into the collecting reservoir (1), and wherein
the working medium flowed out is returned into the sorption unit.

13. The use according to claim 12 wherein the working medium condenses in the collecting reservoir (1) and preferred, wherein the working medium is returned in a liquid form.

14. The use as claimed in at least one of claims 12 or 13, wherein the collecting reservoir (1) is connected to an inert gas trap (4) of the sorption unit.

15. The use as claimed in at least one of claims 12 to 14, wherein the working medium is sucked back by vacuum pressure.

## Revendications

1. Dispositif de sorption, comprenant au moins un récipient de collecte (1), un condensateur (3), un désorbeur et un fluide de travail, dans lequel le récipient de collecte (1) est relié directement ou indirectement au condensateur (3) et dans lequel au moins un élément étrangleur (2) est agencé entre le récipient de collecte (1) et le condensateur (3), dans lequel du fluide de travail est collecté dans le récipient de collecte (1), lequel s'échappe lors de l'échappement de gaz inerte et dans lequel ce fluide de travail du récipient de collecte (1) peut être ramené, dans une partie du dispositif de sorption, qui est différent du récipient de collecte (1), **caractérisé en ce que** le récipient de collecte (1) présente au moins une ouverture sur l'environnement, pour qu'une compensation de pression constante soit garantie et qu'il y ait toujours une pression ambiante dans le récipient de collecte (1), ce par quoi il n'y a pas apparition de surpression lorsque le gaz inerte avec fluide de travail entre dans le récipient de collecte (1) et il n'y a pas apparition de dépression lorsque le condensat est ré-aspiré.

2. Dispositif de sorption selon la revendication 1, dans lequel le dispositif de sorption comprend en outre un piège à gaz inerte (4) et le récipient de collecte (1) est relié au condensateur (3) par le biais de ce piège à gaz inerte (4).

3. Dispositif de sorption selon la revendication 2, dans lequel un premier élément étrangleur (2) est agencé entre le piège à gaz inerte (4) et le récipient de collecte (1) et un deuxième élément étrangleur (2) est agencé entre le condensateur (3) et le piège à gaz inerte (4).

4. Dispositif de sorption selon au moins l'une quelconque des revendications précédentes, dans lequel le récipient de collecte (1) comprend des déflecteurs internes.

5. Dispositif de sorption selon au moins l'une quelconque des revendications précédentes, dans lequel le dispositif de sorption est un dispositif d'adsorption, de préférence une machine frigorifique d'adsorption.

6. Dispositif de sorption selon au moins l'une quelconque des revendications précédentes, dans lequel le dispositif de sorption comprend plusieurs récipients de collecte (1), lesquels sont agencés l'un derrière l'autre.

7. Dispositif de sorption selon au moins l'une quelconque des revendications précédentes, dans lequel le récipient de collecte (1) est fabriqué en métal et/ou plastique.

8. Dispositif de sorption selon au moins l'une quelconque des revendications précédentes, dans lequel le récipient de collecte (1) comprend une source de froid et/ou des nervures de refroidissement.

9. Procédé de récupération de fluide de travail lors d'un processus de sorption d'un dispositif de sorption selon au moins l'une quelconque des revendications précédentes, dans lequel du fluide de travail sorti, lequel s'est échappé lors d'un retrait de gaz inertes, est collecté dans le récipient de collecte (1) et est ramené du récipient de collecte (1) dans une partie du dispositif de sorption, qui est différent du récipient de collecte (1).

10. Procédé selon la revendication précédente, comprenant les étapes suivantes :
a. introduction d'un fluide de travail sous forme de vapeur du désorbeur dans le condensateur (3), dans lequel le fluide de travail se condense au moins en partie dans le condensateur (3) et le gaz inerte s'accumule dans le condensateur (3),
b. augmentation de la pression dans le condensateur (3), de préférence par chauffage,
c. ouverture d'un élément étrangleur (2) agencé entre le condensateur (3) et le récipient de collecte (1), dans lequel le gaz inerte et le fluide de travail s'écoulent du condensateur (3) dans le récipient de collecte (1),
d. recueil du fluide de travail dans le récipient de collecte (1),
e. recyclage du fluide de travail dans une partie du dispositif de sorption, qui est différent du récipient de collecte (1).

11. Procédé selon la revendication 9, dans lequel le récipient de collecte (1) est relié au condensateur (3) par le biais d'un piège à gaz inerte (4) et dans lequel le procédé comprend les étapes suivantes :
(i) refroidissement du piège à gaz inerte par un élément de refroidissement à une température, qui est inférieure, égale ou similaire à celle du condensateur (3),
(ii) introduction d'un fluide de travail sous forme de vapeur du désorbeur ou de l'unité de désorbeur dans le condensateur (3), dans lequel le fluide de travail se condense au moins en partie dans le condensateur (3) et le gaz inerte s'accumule dans le condensateur (3).
(iii) ouverture de l'élément étrangleur (2) agencé entre le condensateur (3) et le piège à gaz inerte (4), dans lequel le gaz inerte et le fluide de travail sous forme de vapeur s'écoulent du condensateur (3) dans le piège à gaz inerte,
(iv) chauffage du piège à gaz inerte,
(v) ouverture de l'élément étrangleur (2) agencé entre le piège à gaz inerte et le récipient de collecte (1), par lequel le gaz inerte et le fluide de travail sortent du piège à gaz inerte (4) dans le récipient de collecte (1),
(vi) recueil du fluide de travail dans le récipient de collecte (1),
(vii) recyclage du fluide de travail, dans une partie du dispositif de sorption, qui est différent du récipient de collecte (1).

12. Utilisation d'un récipient de collecte (1) pour la collecte et le recyclage de fluide de travail lors d'un processus de sorption, dans laquelle le récipient de collecte (1) présente au moins une ouverture sur l'environnement, pour qu'une compensation de pression constante soit garantie et qu'il y ait toujours une pression ambiante dans le récipient de collecte (1), ce par quoi il n'y a pas apparition de surpression lorsque le gaz inerte avec fluide de travail entre dans le récipient de collecte (1) et il n'y a pas apparition de dépression lorsque le condensat est ré-aspiré, et dans laquelle le récipient de collecte (1) est monté au niveau d'une unité de sorption et dans laquelle le fluide de travail s'écoule lors du retrait de gaz inerte de l'unité de sorption dans le récipient de collecte (1) et dans laquelle le fluide de travail sorti est ramené dans l'unité de sorption.

13. Utilisation selon la revendication 12, dans laquelle le fluide de travail se condense dans le récipient de collecte (1), et de préférence, dans laquelle le fluide de travail est ramené sous forme liquide.

14. Utilisation selon au moins l'une quelconque des revendications 12 ou 13, dans laquelle le récipient de collecte (1) est relié à un piège à gaz inerte (4) de l'unité de sorption.

15. Utilisation selon au moins l'une quelconque des revendications 12 à 14, dans laquelle le fluide de travail est ré-aspiré par dépression.
